# FASCICULE DE BREVET EUROPEEN

(11) **EP 3 519 669 B1**
(45) Date de publication et mention de la délivrance du brevet: **26.10.2022**
(21) Numéro de dépôt: 17787499.7
(22) Date de dépôt: 28.09.2017
(51) Int. Cl.: E21B 36/00, E21B 43/013, F16L 1/19, F16L 9/18, F16L 53/00

(54) **PROCÉDÉ D'INSTALLATION EN MER D'UNE CONDUITE SOUS-MARINE PRÉCHAUFFÉE À DOUBLE ENVELOPPE POUR LE TRANSPORT DE FLUIDES**
VERFAHREN ZUR OFFSHORE-INSTALLATION EINES DOPPELWANDIGEN VORGEWÄRMTEN UNTERWASSERROHRS ZUM TRANSPORT VON FLÜSSIGKEITEN
METHOD FOR THE OFFSHORE INSTALLATION OF A PREHEATED DOUBLE-WALLED UNDERWATER PIPE FOR TRANSPORTING FLUIDS

(30) Priorité: 29.09.2016 FR 1659307
(43) Date de publication de la demande: 07.08.2019
(73) Titulaire: Saipem SA, 78180 Montigny-le-Bretonneux (FR)
(72) Inventeur: COCAULT-DUVERGER, Vincent, 78580 Herbeville (FR); JARDIN, Antoine, 78000 Versailles (FR); CHOJNACKI, Vincent, 78310 Maurepas (FR)
(74) Mandataire: Cabinet Beau de Loménie
(86) Numéro de dépôt international: PCT/FR2017/052649
(87) Numéro de publication internationale: WO 2018/060637

(56) Documents cités:
- EP-A1- 0 574 500
- WO-A1-2011/037459
- WO-A1-2016/128655
- WO-A1-2016/128656
- GB-A- 2 492 883

## Description

### Arrière-plan de l'invention

La présente invention se rapporte au domaine général de l'installation en mer de conduites sous-marines reposant au fond de la mer ou assurant la liaison fond-surface pour le transfert d'hydrocarbures, par exemple de pétrole et de gaz, issus de puits de production sous-marins.

Elle concerne plus précisément les conduites sous-marines à double enveloppe de type « Pipe In Pipe » ou PIP, c'est-à-dire « conduite dans une conduite », dans laquelle une enveloppe interne transporte les fluides et une enveloppe externe coaxiale à l'enveloppe interne est en contact avec le milieu ambiant, c'est-à-dire avec l'eau de mer.

L'espace annulaire entre les deux enveloppes peut être rempli d'un matériau isolant ou encore être vidé de tout gaz de façon à assurer une isolation thermique pour les fluides circulant dans le conduit interne. De telles conduites coaxiales sous-marines sont particulièrement utilisées dans le cadre d'installations par grandes profondeurs où la température de l'eau est typiquement de 4°C.

Généralement, les conduites sous-marines à double enveloppe sont assemblées à terre en une pluralité de sections de conduite appelées « rames », chaque section de conduite étant réalisée à partir d'un ou plusieurs éléments unitaires de conduite, de l'ordre de 10 à 1000m selon la capacité de tenue en charge du système de pose. Ces sections de conduite sont alors transportées en mer sur un navire de pose où elles sont raccordées les unes aux autres au fur et à mesure de leur pose en mer (par une pose en J, en S, en déroulé ou en sections flottées).

Les techniques de pose nécessitent de raccorder chaque nouvelle section de conduite à la conduite déjà installée en mer avant de descendre cette nouvelle section de conduite dans la mer en déplaçant le navire de pose vers l'avant. Cette étape de raccordement s'effectue typiquement en soudant bout à bout les extrémités libres en acier des enveloppes internes et externes respectives de la nouvelle section de conduite et de la conduite déjà installée en mer.

Lors de la pose, les enveloppes internes des différentes sections de conduite se compriment sous leur propre poids et transmettent ces efforts à l'enveloppe externe de la conduite. Cette précontrainte induite pendant la pose en J limite la résistance de la conduite lors de son passage dans la zone de flexion avant de reposer sur le fond marin. L'ajout d'éléments de liaison mécanique (de type « bulkhead ») est alors nécessaire pour limiter cette précontrainte. Cependant, l'ajout de ces pièces de liaison mécanique présente de nombreux inconvénients. En particulier, l'ajout de ces pièces rallonge du temps navire par la nécessité d'assembler des demi-coquilles sur l'enveloppe externe de la conduite au niveau de l'emplacement des pièces de liaison mécanique. De plus, ces demi-coquilles sont typiquement assemblées entre elles par l'intermédiaire d'un cordon de soudure dont la qualité n'est pas optimale. Par ailleurs, la présence de ces éléments de liaison mécanique sur la conduite ajoute des points froids le long de celle-ci.

Par ailleurs, lorsque la conduite installée au fond de la mer est en service et que la température du fluide qu'elle transporte atteint des températures modérées à hautes (de l'ordre de 50 à 150°C), l'augmentation de température provoque une dilatation de l'enveloppe interne des différentes sections de la conduite par rapport à leur enveloppe externe plus froide (car en contact avec l'eau de mer à une température basse de l'ordre de 3 à 5°C). Cette dilatation de l'enveloppe interne des sections de conduite se traduit par une compression de l'enveloppe interne, cette dernière étant en effet bloquée à chaque extrémité de la conduite sous-marine par les éléments de fermeture de l'espace annulaire entre les deux enveloppes. Ce flambement, s'il se concentre à une section de la conduite, induit des efforts de flexion qui peuvent entraîner la ruine de l'ouvrage. Il est donc nécessaire de s'assurer que l'expansion de la conduite soit répartie dans des zones de flambement pour éviter une telle concentration.

On connaît du document WO 2007/096548 un procédé de fabrication d'un élément de conduite coaxiale comprenant une conduite interne et une conduite externe avec un espace annulaire formé entre ces conduites et fermé à chacune de ses extrémités. Ce procédé de fabrication se caractérise en ce que la conduite interne est soumise à une contrainte de traction mécanique entre les extrémités fermées de l'espace annulaire lorsque la conduite interne est hors service.

Ce procédé de fabrication s'applique plus spécifiquement aux conduites coaxiales dans lesquelles l'espace annulaire entre la conduite interne et la conduite externe est fermé, soit par croquage, c'est-à-dire par déformation de la partie terminale de la conduite externe pour la raccorder directement à la surface de la conduite interne, soit par raccordement à une pièce de jonction directement ou par l'intermédiaire de deux demi-coquilles formant un manchon tubulaire intercalé entre les extrémités de la conduite externe et de la pièce de jonction. Une fois que la contrainte de traction a été appliquée à une extrémité de la conduite interne, l'espace annulaire au niveau de cette extrémité est fermé.

Le procédé de fabrication décrit dans ce document s'applique donc à des conduites coaxiales ayant nécessairement besoin de recourir à des pièces de fixation entre les conduites interne et externe de chaque section de conduite.

On connaît également du document GB 2,492,883 un procédé d'installation d'une conduite dans laquelle on vient exercer une précontrainte des éléments unitaires d'enveloppe interne lors de l'assemblage à terre des sections de conduite (ou rames). Cependant, un tel procédé d'installation présente l'inconvénient qu'il est nécessaire de recourir à des éléments de liaison mécanique entre les différentes sections de conduite avec tous les inconvénients que ces éléments de liaison mécanique comportent.

### Objet et résumé de l'invention

La présente invention a donc pour but principal de proposer un procédé d'installation en mer d'une conduite sous-marine qui ne présente pas les inconvénients précités.

Conformément à l'invention, ce but est atteint grâce à un procédé selon la revendication 1.

Le procédé selon l'invention est remarquable notamment en ce qu'il prévoit d'induire dans la conduite un effort de précontrainte en tension au fur et à mesure de son installation en mer par le préchauffage des éléments unitaires d'enveloppe interne des nouvelles sections de conduite. Cet effort de précontrainte est ainsi appliqué de manière successive à toutes ou certaines des sections de conduite en même temps que leur installation en mer directement depuis le navire de pose.

Le préchauffage des éléments unitaires d'enveloppe interne des sections de conduite est appliqué de façon à initier une précontrainte de tension dans la conduite pendant sa pose. De la sorte, pendant les phases de production (c'est-à-dire lorsque l'enveloppe interne de la conduite est parcourue par les fluides à transporter), cette précontrainte de tension permet de réduire la compression de la conduite, et ainsi de minimiser les risques de flambement de celle-ci.

En minimisant les risques de flambement de la conduite, on peut ainsi réduire, voire supprimer, les systèmes de contrôle du flambement. De même, il est possible de réduire (voire de supprimer) les surépaisseurs des sections de conduite sujettes au flambement. La durée de la campagne offshore peut également être réduite.

De plus, le procédé selon l'invention permet de simplifier la gestion du tassement différentiel se créant entre les deux enveloppes de la conduite. En effet, la réduction de la longueur de l'enveloppe interne sous l'effet de son propre poids par rapport à l'élongation de l'enveloppe externe sous l'effet combiné du poids des deux enveloppes peut être réduite.

Une extrémité des éléments unitaires d'enveloppe interne de chaque nouvelle section de conduite peut être maintenue centrée à l'intérieur des éléments unitaires d'enveloppe externe correspondant par l'intermédiaire d'un dispositif d'anti-glissement et d'auto-centrage.

Dans ce cas, après l'étape de descente en mer de chaque nouvelle section de conduite, le dispositif d'anti-glissement et d'autocentrage est avantageusement activé.

Le préchauffage des éléments unitaires d'enveloppe interne de chaque nouvelle section de conduite peut être réalisé par chauffage par induction desdits éléments unitaires d'enveloppe interne.

Dans une variante de réalisation, l'installation en mer de la conduite s'effectue au moyen d'un navire de pose comprenant une tour de pose en J ;
l'étape de préchauffage des éléments unitaires d'enveloppe interne de chaque nouvelle section de conduite s'effectue dans une position sensiblement horizontale des éléments unitaires d'enveloppe interne,
l'étape d'assemblage des éléments unitaires d'enveloppe interne de chaque nouvelle section de conduite à l'enveloppe interne de la conduite déjà installée en mer comprend le levage desdits éléments unitaires d'enveloppe interne dans la tour de pose en J pour les basculer en position sensiblement verticale ;
l'étape d'assemblage des éléments unitaires d'enveloppe externe de chaque nouvelle section de conduite à l'enveloppe externe de la conduite déjà installée en mer comprend au préalable le glissement relatif des éléments unitaires d'enveloppe externe par rapport aux éléments unitaires d'enveloppe interne ; et
l'étape de descente en mer de chaque nouvelle section de conduite comprend l'avance vers l'avant du navire de pose d'une avance correspondant sensiblement à la longueur de la section de conduite.

De façon avantageuse, les éléments unitaires d'enveloppe interne de certaines sections de conduite sont assemblés à l'enveloppe interne de la conduite déjà installée en mer sans être soumis au préalable à un préchauffage. En phase de production, les sections de conduite dont les éléments unitaires d'enveloppe interne n'auront pas été préchauffés (c'est-à-dire qui n'auront pas été mis en précontrainte en traction au cours de sa pose) entreront en compression à un niveau de force axial inférieur aux sections de conduite préchauffées. De telles sections de conduite nonprécontraintes présenteront une force critique de flambement qui sera inférieure à celle des sections de conduite précontraintes. En ne préchauffant pas les éléments unitaires d'enveloppe interne de certaines sections de conduite, il est possible de déclencher le flambement de la conduite à des points prédéfinis durant la conception, et ainsi répartir les élongations thermiques opératoires dans des zones de flambement contrôlées, à intervalles réguliers sur toute la ligne. De la sorte, on peut s'affranchir des structures ou pièces auxiliaires particulièrement onéreuses qui sont couramment rajoutées le long de la conduite pour provoquer le flambement de la conduite.

Dans une autre variante de réalisation, l'étape de préchauffage des éléments unitaires d'enveloppe interne de chaque nouvelle section de conduite est réalisée par chauffage électrique des éléments unitaires d'enveloppe interne par l'intermédiaire de câbles électriques de chauffage s'étendant sur toute la longueur des éléments unitaires d'enveloppe interne.

Dans cette variante, préalablement à l'étape d'assemblage d'une extrémité libre des éléments unitaires d'enveloppe externe de chaque nouvelle section de conduite à l'enveloppe externe de la conduite déjà installée en mer, le procédé peut comprendre une étape de connexion électrique des câbles électriques de chauffage des éléments unitaires d'enveloppe interne aux câbles électriques de chauffage de l'élément unitaire d'enveloppe interne de la section de conduite précédente.

Dans ce cas, on maintient avantageusement le chauffage électrique des éléments unitaires d'enveloppe interne des sections de conduite installées pendant toute l'installation en mer de la conduite, puis on désactive ce chauffage électrique une fois la conduite complètement réalisée à bord du navire de pose puis installée au fond de la mer.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

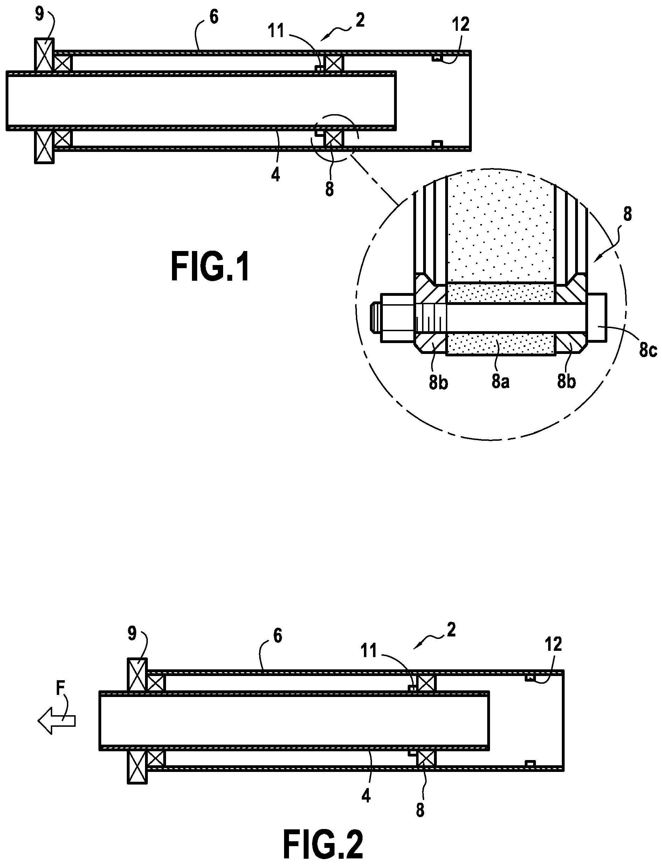

- les figures 1 à 5 représentent l'application du procédé d'installation selon un mode de réalisation de l'invention à la pose en J d'une conduite sous-marine.

### Description détaillée de l'invention

L'invention s'applique à la pose (ou installation en mer) d'une conduite sous-marine à double enveloppe de type « Pipe in Pipe » (ou « PIP »), c'est-à-dire une conduite qui comprend une enveloppe interne destinée à transporter des hydrocarbures issus de puits de production et une enveloppe externe disposée autour de l'enveloppe interne en lui étant coaxiale et destinée à être en contact direct avec l'eau de mer environnante.

Ce type de conduite sous-marine est typiquement utilisé dans la production offshore d'hydrocarbures par grande profondeur. Dans le cadre de telles installations, les conduites à double enveloppe peuvent être assemblées à terre en plusieurs sections de conduite, chaque section de conduite étant formée à partir de plusieurs éléments de longueur unitaire (on parle également de « rames »), de l'ordre de 10 à 100 m selon la capacité de tenue du système de pose, ces éléments unitaires de conduite étant assemblés sans recours à des éléments de liaison mécanique de type « bulkhead »(pièce forgée de liaison).

Lors de la pose (en J ou en S), les sections de conduite sont raccordées les unes aux autres à bord du navire et au fur et à mesure de leur installation en mer. Plus précisément, avec la pose en J, la conduite sous-marine est typiquement descendue du navire de pose pratiquement verticale (entre +30° et -10° par rapport à la verticale). Cette inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin.

Les figures 1 à 5 illustrent les différentes étapes d'une pose en J selon un mode de réalisation du procédé d'installation en mer selon l'invention.

Sur la figure 1, est représentée en position horizontale une nouvelle section de conduite 2 destinée à être assemblée sur la portion de conduite déjà installée en mer.

Cette section de conduite 2 comprend plusieurs éléments unitaires d'enveloppe interne 4 en acier destinés à recevoir le fluide à transporter et plusieurs éléments unitaires d'enveloppe externe 6 assemblés autour des éléments unitaires d'enveloppe interne en leur étant coaxiaux.

Cette section de conduite 2 est obtenue en effectuant un glissement des éléments unitaires d'enveloppe interne 4 à l'intérieur des éléments unitaires d'enveloppe externe 6 en interposant entre ces éléments à l'une de leurs extrémités un dispositif d'anti-glissement et d'auto-centrage 8, ce dispositif étant dans un état désactivé. A l'autre extrémité des éléments unitaires d'enveloppe interne 4, un collier 9 d'aide à l'installation permet de retenir la section de conduite 2, celle-ci pouvant en effet coulisser par rapport aux éléments unitaires d'enveloppe externe 6.

Un exemple d'un tel dispositif d'anti-glissement et d'autocentrage est décrit dans la demande de brevet WO 2016/128655. Typiquement, ce dispositif 8 comprend un anneau en matériau élastomère 8a pris en sandwich entre deux plaques annulaires métalliques 8b dont un diamètre interne correspond sensiblement au diamètre des éléments unitaires d'enveloppe interne et un diamètre externe correspond sensiblement au diamètre des éléments unitaires d'enveloppe externe. Des moyens de serrage (de type vis/écrous 8c par exemple) des plaques entre elles permettent de comprimer l'anneau en matériau élastomère.

A l'étape suivante du procédé (figure 2), il est prévu de préchauffer les éléments unitaires d'enveloppe interne 4 de la section de conduite 2 ainsi obtenue.

Cette étape de préchauffage est effectuée à bord du navire de pose, au moment de l'assemblage de la nouvelle section de conduite sur la portion de conduite déjà installée en mer.

Le préchauffage des éléments unitaires d'enveloppe interne 4 en acier peut être réalisé par chauffage par induction desdits éléments unitaires d'enveloppe interne. On pourra ainsi recourir à un chauffage électrique disposé à l'intérieur des éléments unitaires d'enveloppe interne, ce chauffage provoquant une dilatation, et donc une élongation axiale F, des éléments unitaires d'enveloppe interne par rapport aux éléments unitaires d'enveloppe externe (qui sont non soumis au préchauffage).

Par exemple, le chauffage électrique par induction se présente sous la forme d'un ou plusieurs chariots portant chacun un noyau de ferrite bobiné qui est alimenté en électricité, les chariots étant déplacés à l'intérieur des éléments unitaires de conduite interne pour chauffer ceux-ci grâce au champ magnétique que le noyau de ferrite bobiné génère. Avec ce type de dispositif, pour obtenir une élévation de 130°C de la température d'éléments unitaires d'enveloppe interne en acier ayant une longueur de 48m, un diamètre extérieur de 273 mm et une épaisseur de 20 mm, le temps de préchauffage est d'environ 30 min.

A titre d'exemple, on appliquera un préchauffage permettant d'obtenir une température des éléments unitaires d'enveloppe interne de l'ordre de 150°C environ, ce qui engendre une élongation desdits éléments de 0,075m pour une section de conduite de 48m de long. En terme de précontrainte, cette élongation équivaut à une tension en traction des éléments unitaires d'enveloppe interne de 323 MPa. Pour un acier ayant une nuance API 5L X60, c'est-à-dire une limite d'élasticité de 413 MPa, on obtient ainsi un taux de travail en traction de 78%.

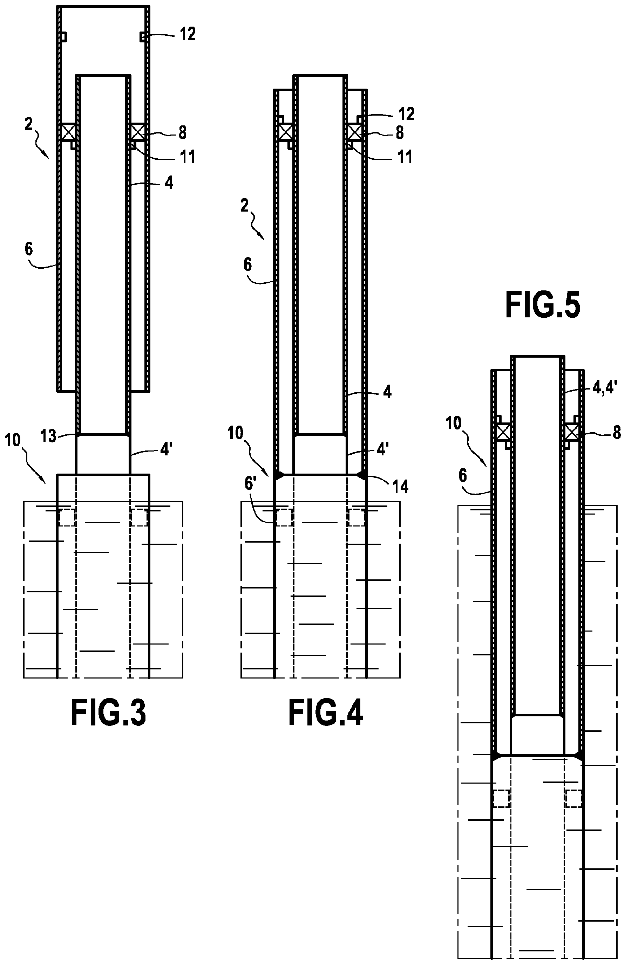

Au cours de l'étape suivante (figure 3), une fois les éléments unitaires d'enveloppe interne 4 de la nouvelle section de conduite 2 préchauffés à la température voulue, on les assemble à l'enveloppe interne 4' de la conduite 10 déjà installée en mer.

A cet effet, les éléments unitaires d'enveloppe interne de la section de conduite 2 sont placés dans la tour de pose en J (non représenté sur les figures) pour y être basculés en position sensiblement verticale (typiquement entre +30° et -10° par rapport à la verticale).

Une fois dans la tour de pose, l'extrémité inférieure des éléments unitaires d'enveloppe interne 4 est soudé à l'extrémité supérieure de l'élément unitaire d'enveloppe interne 4' de la conduite 10 déjà installée en mer (le cordon de soudure 13 est visible sur la figure 3). Cette opération de soudage est connue en soi et n'est donc pas détaillée ici. Elle est réalisée entre les éléments unitaires d'enveloppe interne 4, 4'. Au cours de cette étape, la déperdition thermique des éléments unitaires d'enveloppe interne 4 qui ont été préchauffés est typiquement de 1 Kelvin par heure (avec des éléments unitaires d'enveloppe interne en acier ayant une longueur de 48m, un diamètre extérieur de 273 mm et une épaisseur de 20 mm, ainsi qu'un facteur d'échange thermique de 1 Watt par mètre carré par Kelvin).

Comme représenté sur la figure 4, et de façon connue, les éléments unitaires d'enveloppe externe 6 de la nouvelle section de conduite 2 sont alors glissés vers le bas (par rapport aux éléments unitaires d'enveloppe interne) pour permettre son assemblage par soudage à l'élément unitaire d'enveloppe externe 6' de la conduite 10 déjà installée en mer (le cordon de soudure 14 est visible sur la figure 4).

Une fois les éléments unitaires d'enveloppe externe 6 de la nouvelle section de conduite 2 soudés à l'élément unitaire d'enveloppe externe de la conduite déjà installée en mer, la nouvelle section de conduite 2 est descendue verticalement en mer en déplaçant le navire de pose vers l'avant d'une distance égale à la longueur de cette section de conduite 2 (figure 5).

Avant de réitérer les étapes précédemment décrites en liaison avec les figures 1 à 5 avec une nouvelle section de conduite à assembler à la précédente, le dispositif d'anti-glissement et d'auto-centrage 8 tel que décrit dans la demande de brevet WO 2016/128655 pour ancrer une extrémité des éléments unitaires d'enveloppe interne aux éléments unitaires d'enveloppe externe, est activé, c'est-à-dire que l'on vient serrer les plaques du dispositif entre elles pour comprimer l'anneau en matériau élastomère au niveau requis, cet effort de serrage permettant au dispositif d'anti-glissement et d'auto-centrage de reprendre l'effort qui s'exercera lors du refroidissement des éléments unitaires d'enveloppe interne à la température du fond de la mer (4°C)..

De façon plus précise, il est prévu des moyens pour permettre au dispositif d'anti-glissement et d'auto-centrage 8 de reprendre l'effort qui s'exercera lors du refroidissement de l'élément unitaire d'enveloppe interne. Par exemple, un épaulement annulaire interne 11 porté par l'élément unitaire d'enveloppe interne 4 et un épaulement annulaire externe 12 porté par l'élément unitaire d'enveloppe externe 6 permettent d'assurer un blocage en position axiale du dispositif d'anti-glissement et d'auto-centrage 8 une fois que l'élément unitaire d'enveloppe interne aura refroidi (voir la figure 4 notamment).

L'exemple d'application du procédé selon l'invention décrit cidessus s'applique à la pose en J d'une conduite sous-marine. Bien entendu, l'invention s'applique également à la pose en S, en déroulé ou en sections flottées d'une telle conduite. De façon connue, avec notamment la pose en S, la conduite sous-marine est typiquement descendue du navire de pose pratiquement à l'horizontale et se courbe ensuite pour atteindre le fond marin.

Dans un autre mode de réalisation de l'invention (non illustré sur les figures), le préchauffage des éléments unitaires d'enveloppe interne de chaque nouvelle section de conduite à assembler sur la conduite déjà installée en mer est réalisé par chauffage électrique de ces éléments unitaires d'enveloppe interne par l'intermédiaire d'une pluralité de câbles électriques de chauffage s'étendant sur toute la longueur des éléments unitaires d'enveloppe interne.

Plus précisément, ces câbles électriques de chauffage sont des câbles qui sont typiquement positionnés dans l'espace annulaire entre les enveloppes interne et externe de la conduite en les faisant cheminer le long de l'enveloppe interne sur toute sa longueur. Ces câbles sont ainsi des câbles électriques enroulés autour de l'enveloppe interne pour la chauffer par effet Joule. Cette technique, appelée « chauffage tracé » (ou « heat tracing » en anglais), permet de maintenir les fluides transportés dans les conduites sous-marines à une température supérieure à un seuil critique sur tout leur trajet depuis le puits de production jusqu'à l'installation de surface (et éviter ainsi l'apparition de phénomènes gênants dans les conduites pour le maintien de bonnes conditions de circulation).

Dans le cas de la présente invention, on peut avantageusement utiliser ces câbles de chauffage électrique pour chauffer les éléments unitaires d'enveloppe interne de chaque nouvelle section de conduite pour les allonger en les dilatant au cours de leur installation en mer.

A cet effet, préalablement à l'étape d'assemblage d'une extrémité des éléments unitaires d'enveloppe externe de chaque nouvelle section de conduite à l'enveloppe externe de la conduite déjà installée en mer, le procédé selon l'invention comprend une étape de connexion électrique des câbles électriques de chauffage des éléments unitaires d'enveloppe interne aux câbles électriques de chauffage de l'élément unitaire d'enveloppe interne de la conduite déjà installée en mer.

De préférence, cette connexion pourra être réalisée au moyen de connecteurs mâles et femelles tels que décrits dans la demande de brevet WO 2016/128656. Le recours à de tels connecteurs permet d'assurer une continuité électrique entre les câbles de chaque nouvelle section de conduite et les câbles de la conduite déjà installée en mer qui soit simple, rapide et efficace.

Au cours de ce procédé d'installation, on maintient le chauffage électrique des éléments unitaires d'enveloppe interne des différentes sections de conduite installées pendant toute l'installation en mer de la conduite (l'enveloppe interne de la conduite est mise en précontrainte pendant toute la pose de la conduite). Une fois que la conduite est complètement fabriquée sur le navire de pose, on peut désactiver le chauffage électrique de sorte à interrompre l'alimentation électrique de maintien en température des éléments unitaires d'enveloppe interne. Bien entendu, les câbles de chauffage pourront à nouveau être utilisés en phase de production pour maintenir les fluides transportés à une température supérieure à un seuil critique comme usuellement pratiqué.

On notera que le procédé d'installation selon ce mode de réalisation par chauffage électrique pourrait également s'appliquer à l'installation d'une conduite à simple enveloppe (c'est-à-dire dépourvue d'enveloppe externe). En effet, dans ce cas, le préchauffage électrique des différentes sections de conduite au fur et à mesure de leur pose permet d'assurer une mise en précontrainte de la conduite, cette précontrainte étant reprise à l'issue de l'opération de pose par le sol sur lequel repose la conduite.

On notera également que les éléments unitaires d'enveloppe interne de certaines sections de conduite sont assemblés à l'enveloppe interne de la conduite déjà installée en mer sans être soumis au préalable à un préchauffage (seules certaines sections de conduite sont soumises à une précontrainte de leur enveloppe interne). Cette variante de réalisation permet d'obtenir un déclencheur de flambement contrôlé.

Par exemple, pour une conduite coaxiale de diamètre 8 pouces en interne et 14 pouces en externe avec une longueur de 8,5km par une profondeur de 1300m, une précontrainte initiale d'environ 0.02% de déformation est introduite au cours du procédé d'installation selon l'invention. Si la pression interne du système en opération de 260bara et la température de 100°C sont appliquées, l'ouvrage nécessite des systèmes de mitigation du flambement au nombre de 3, typiquement sous forme de structures métalliques de 16 tonnes déclenchant le flambement à cette position. L'application de précontraintes différentes selon des sections définies permet d'éliminer de tels ouvrages, leur fonction étant remplie par des zones où la précontrainte d'installation est maintenue, devenant ainsi des zones d'instabilité privilégiées pour le flambement. Pour un projet comportant 3 sections de ce type, cette méthode permet par ailleurs de réduire à 6 le nombre de pièces de liaison mécanique (« bulkheads ») au lieu de 11 uniformément réparties. La suppression des ouvrages de mitigation permet de simplifier les phases d'installation des conduites sous-marines en supprimant les phases préparatoires d'installation de ces structures. La réduction du nombre de pièces de liaison mécanique permet également de réduire le temps passé en mer à construire la conduite et donc son coût.

L'invention décrite ici et son utilisation pour contrôler finement la flexion admissible peut aussi être utilisée dans les zones où le terrain naturel est chahuté. Certains fonds marins sont accidentés et induisent des portées libres importantes de la conduite. Dans le cas de conduites à double enveloppe, le problème de ces portées libres est amplifié par le poids de la conduite coaxiale, et réclame éventuellement des ouvrages onéreux de soutènement ou d'enrochements. La mise en précontrainte habilement sélectionnée de certaines zones de la conduite permet donc de réduire la criticité des portées libres, par contrôle de la flexion critique des deux tubes, et donc de limiter habilement les ouvrages de soutènement. Cela s'avère particulièrement avantageux dans le cas de passage de falaises sous-marines par exemple. La même invention et le même principe s'appliquent aussi aux zones sujettes à la pêche où l'accroche éventuelle d'engins soumet la conduite à une importante flexion ou déclenche le flambement incontrôlé de la conduite.

On notera encore que la limitation de la flexion induite par le flambement de conduite et donc la gestion du flambement de cette conduite devient particulièrement critique dans le cas particulier des tubes chemisés. Afin de renforcer les propriétés de résistance à la corrosion, il est connu de recourir à des conduites coaxiales dont le tube interne est chemisé d'une fine couche de matériaux aux propriétés particulières, par exemple des alliages de type 625 ou 825. Une méthode de construction de ces tubes consiste à introduire une chemise dans la conduite interne, mécaniquement liée à cette conduite ainsi qu'à ses extrémités. Les problèmes d'effondrement de cette chemise sont bien connus. Cette limitation en flexion s'applique aussi à la phase opératoire lors de l'arrêt de l'écoulement dans la conduite. La pression interne dans la conduite chute bien que la conduite en flambement soit encore soumise à flexion due à la température des parois qui décroit beaucoup plus lentement que la pression. Cet effet peut entraîner un effondrement irréversible de la chemise interne ce qui peut rendre l'ouvrage inopérable. L'invention décrite ici permet donc de limiter habilement la flexion de la ligne par une gestion fine de la précontrainte.

## Revendications

1. Procédé d'installation en mer d'une conduite sous-marine préchauffée à double enveloppe pour le transport de fluides, ladite conduite comprenant une pluralité de sections de conduite (2) assemblées en mer successivement les unes aux autres, chaque section de conduite étant obtenue par l'assemblage à terre entre eux d'au moins deux éléments unitaires d'enveloppe interne (4) destinés à recevoir le fluide à transporter et d'au moins deux éléments unitaires d'enveloppe externe (6) assemblés autour des éléments unitaires d'enveloppe interne en leur étant coaxiaux, l'assemblage des éléments unitaires d'enveloppe externe autour des éléments unitaires d'enveloppe interne étant réalisée sans ajout d'élément de liaison mécanique de type pièce forgée de liaison,
le procédé comprenant successivement, pour chaque nouvelle section de conduite à assembler sur la conduite déjà installée en mer :
une étape de préchauffage des éléments unitaires d'enveloppe interne à l'intérieur des éléments unitaires d'enveloppe externe de la nouvelle section de conduite ;
une étape d'assemblage d'une extrémité libre des éléments unitaires d'enveloppe interne de la nouvelle section de conduite à l'enveloppe interne (4') de la conduite (10) déjà installée en mer ;
une étape d'assemblage d'une extrémité libre des éléments unitaires d'enveloppe externe de la nouvelle section de conduite à l'enveloppe externe (6') de la conduite (10) déjà installée en mer ;
une étape de descente en mer de la nouvelle section de conduite ; et
la répétition des étapes précédentes pour d'autres nouvelles sections de conduite à assembler de sorte à assurer une mise en précontrainte de la conduite au cours de son installation en mer ;
**caractérisé en ce que** les éléments unitaires d'enveloppe interne de certaines sections de conduite sont assemblés à l'enveloppe interne de la conduite déjà installée en mer sans être soumis au préalable à un préchauffage.

2. Procédé selon la revendication 1, dans lequel une extrémité des éléments unitaires d'enveloppe interne de chaque nouvelle section de conduite est maintenue centrée à l'intérieur de l'élément unitaire d'enveloppe externe correspondant par l'intermédiaire d'un dispositif (8) d'anti-glissement et d'auto-centrage.

3. Procédé selon la revendication 2, dans lequel, après l'étape de descente en mer de chaque nouvelle section de conduite, le dispositif d'anti-glissement et d'auto-centrage est activé.

4. Procédé selon l'une quelconque des revendications 1 à 3, dans lequel le préchauffage des éléments unitaires d'enveloppe interne de chaque nouvelle section de conduite est réalisé par chauffage par induction desdits éléments unitaires d'enveloppe interne.

5. Procédé selon l'une quelconque des revendications 1 à 4, dans lequel l'installation en mer de la conduite s'effectue au moyen d'un navire de pose comprenant une tour de pose en J ;
l'étape de préchauffage des éléments unitaires d'enveloppe interne de chaque nouvelle section de conduite s'effectue dans une position sensiblement horizontale des éléments unitaires d'enveloppe interne,
l'étape d'assemblage des éléments unitaires d'enveloppe interne de chaque nouvelle section de conduite à l'enveloppe interne de la conduite déjà installée en mer comprend le levage desdits éléments unitaires d'enveloppe interne dans la tour de pose en J pour les basculer en position sensiblement verticale ;
l'étape d'assemblage des éléments unitaires d'enveloppe externe de chaque nouvelle section de conduite à l'enveloppe externe de la conduite déjà installée en mer comprend au préalable le glissement relatif des éléments unitaires d'enveloppe externe par rapport aux éléments unitaires d'enveloppe interne ; et
l'étape de descente en mer de chaque nouvelle section de conduite comprend l'avance vers l'avant du navire de pose d'une avance correspondant sensiblement à la longueur de la section de conduite.

6. Procédé selon la revendication 1, dans lequel l'étape de préchauffage des éléments unitaires d'enveloppe interne de chaque nouvelle section de conduite est réalisée par chauffage électrique des éléments unitaires d'enveloppe interne par l'intermédiaire de câbles électriques de chauffage s'étendant sur toute la longueur des éléments unitaires d'enveloppe interne.

7. Procédé selon la revendication 6, dans lequel, préalablement à l'étape d'assemblage d'une extrémité libre des éléments unitaires d'enveloppe externe de chaque nouvelle section de conduite à l'enveloppe externe de la conduite déjà installée en mer, le procédé comprend une étape de connexion électrique des câbles électriques de chauffage des éléments unitaires d'enveloppe interne aux câbles électriques de chauffage de l'élément unitaire d'enveloppe interne de la section de conduite précédente.

8. Procédé selon la revendication 7, dans lequel on maintient le chauffage électrique des éléments unitaires d'enveloppe interne des sections de conduite installées pendant toute l'installation en mer de la conduite, puis on désactive ce chauffage électrique une fois la conduite complètement réalisée à bord du navire de pose puis installée au fond de la mer.

## Patentansprüche

1. Verfahren zur Offshore-Verlegung einer vorgeheizten Unterwasserleitung mit Doppelummantelung für den Fluidtransport, wobei die Leitung eine Vielzahl von Leitungsabschnitten (2) umfasst, die auf See nacheinander miteinander verbunden werden, wobei ein jeder Leitungsabschnitt dadurch erhalten wird, dass wenigstens zwei einzelne Innenmantel-Elemente (4), die dazu bestimmt sind, das zu transportierende Fluid aufzunehmen, und wenigstens zwei einzelne Außenmantel-Elemente (6), die um die einzelnen Innenmantel-Elemente koaxial zu diesen verlaufend aneinander gefügt sind, an Land miteinander verbunden werden, wobei das Verbinden der einzelnen Außenmantel-Elemente um die einzelnen Innenmantel-Elemente ohne Hinzufügen eines mechanischen Verbindungselements vom Typ eines geschmiedeten Verbindungsstücks vollzogen wird,
wobei das Verfahren nacheinander für jeden neuen Leitungsabschnitt, der an der bereits im Meer verlegten Leitung montiert werden soll, umfasst:
einen Schritt des Vorheizens der einzelnen Innenmantel-Elemente innerhalb der einzelnen Außenmantel-Elemente des neuen Leitungsabschnitts
einen Schritt des Verbindens eines freien Endes der einzelnen Innenmantel-Elemente des neuen Leitungsabschnitts mit dem Innenmantel (4') der bereits auf See verlegten Leitung (10),
einen Schritt des Verbindens eines freien Endes der einzelnen Außenmantel-Elemente des neuen Leitungsabschnitts mit dem Außenmantel (6') der bereits auf See verlegten Leitung (10),
einen Schritt des Hinablassens des neuen Leitungsabschnitts ins Meer, und
das Wiederholen der vorherigen Schritte für weitere neue zu verbindende Leitungsabschnitte, um sicherzustellen, dass die Leitung während ihrer Verlegung auf See unter Vorspannung gesetzt wird,
**dadurch gekennzeichnet, dass** die einzelnen Innenmantel-Elemente bestimmter Leitungsabschnitte mit dem Innenmantel der bereits auf See verlegten Leitung verbunden werden, ohne zuvor einem Vorheizen unterzogen zu werden.

2. Verfahren nach Anspruch 1, bei dem ein Ende der einzelnen Innenmantel-Elemente eines jeden neuen Leitungsabschnitts innerhalb des entsprechenden einzelnen Außenmantel-Elements mittels einer Antirutsch- und Selbstzentrier-Vorrichtung (8) zentriert gehalten wird.

3. Verfahren nach Anspruch 2, bei dem nach dem Schritt des Hinablassens eines jeden neuen Leitungsabschnitts ins Meer die Antirutsch- und Selbstzentrier-Vorrichtung aktiviert wird.

4. Verfahren nach einem der Ansprüche 1 bis 3, bei dem das Vorheizen der einzelnen Innenmantel-Elemente eine jeden neuen Leitungsabschnitts durch Induktionserwärmen der einzelnen Innenmantel-Elemente vollzogen wird.

5. Verfahren nach einem der Ansprüche 1 bis 4, bei dem die Offshore-Verlegung der Leitung mittels eines Verlegeschiffs, das einen J-Lay-Turm umfasst, durchgeführt wird,
der Schritt des Vorheizens der einzelnen Innenmantel-Elemente eines jeden neuen Leitungsabschnitts in einer im Wesentlichen horizontalen Position der einzelnen Innenmantel-Elemente durchgeführt wird,
der Schritt des Verbindens der einzelnen Innenmantel-Elemente eines jeden neuen Leitungsabschnitts mit dem Innenmantel der bereits auf See verlegten Leitung das Anheben der einzelnen Innenmantel-Elemente in dem J-Lay-Turm umfasst, um sie in eine im Wesentlichen vertikale Position zu kippen,
der Schritt des Verbindens der einzelnen Außenmantel-Elemente eines jeden neuen Leitungsabschnitts mit dem Außenmantel der bereits auf See verlegten Leitung zuvor das relative Gleiten der einzelnen Außenmantel-Elemente in Bezug auf die einzelnen Innenmantel-Elemente umfasst, und
der Schritt des Hinablassens eines jeden neuen Leitungsabschnitts ins Meer das Vorwärtsbewegen des Verlegeschiffs um einen Vorschub, der im Wesentlichen der Länge des Leitungsabschnitts entspricht, umfasst.

6. Verfahren nach Anspruch 1, bei dem der Schritt des Vorheizens der einzelnen Innenmantel-Elemente eines jedes neuen Leitungsabschnitts durch elektrisches Erwärmen der einzelnen Innenmantel-Elemente mittels elektrischer Heizkabel, welche sich über die gesamte Länge der einzelnen Innenmantel-Elemente erstrecken, durchgeführt wird.

7. Verfahren nach Anspruch 6, bei dem das Verfahren vor dem Schritt des Verbindens eines freien Endes der einzelnen Außenmantel-Elemente eines jeden neuen Leitungsabschnitts mit dem Außenmantel der bereits auf See verlegten Leitung einen Schritt des elektrischen Verbindens der elektrischen Kabel zum Erwärmen der einzelnen Innenmantel-Elemente mit den elektrischen Kabeln zum Erwärmen des einzelnen Innenmantel-Elements des vorherigen Leitungsabschnitts umfasst.

8. Verfahren nach Anspruch 7, bei dem das elektrische Beheizen der einzelnen Innenmantel-Elemente der verlegten Leitungsabschnitte während der gesamten Offshore-Verlegung der Leitung aufrechterhalten wird, anschließend dieses elektrische Beheizen deaktiviert wird, sobald die Leitung an Bord des Verlegeschiffs vollständig hergestellt ist, anschließend auf dem Meeresgrund verlegt ist.

## Claims

1. A method of installing at sea a double-walled preheated undersea pipe for transporting fluids, said pipe comprising a plurality of pipe sections (2) assembled together at sea successively one after another, each pipe section being obtained by assembling together on land at least two inner wall unit elements (4) for receiving the fluid that is to be transported and at least two outer wall unit elements (6) that are assembled coaxially around the inner wall unit elements, the outer wall unit elements being assembled around the inner wall unit elements without adding any mechanical connection element such as a connection forged part, the method comprising in succession, for each new pipe section that is to be assembled to the pipe already installed at sea:
a step of preheating the inner wall unit elements inside the outer wall unit elements of the new pipe section;
a step of assembling a free end of the inner wall unit elements of the new pipe section to the inner wall (4') of the pipe (10) that is already installed at sea;
a step of assembling a free end of the outer wall unit elements of the new pipe section to the outer wall (6') of the pipe (10) that is already installed at sea;
a step of lowering the new pipe section into the sea; and
repeating the above steps for other new pipe sections that are to be assembled so as to prestress the pipe while it is being installed at sea,
**characterized in that** the inner wall unit elements of some of the pipe sections are assembled to the inner wall of the pipe that is already installed at sea without previously being subjected to preheating.

2. A method according to claim 1, wherein one end of the inner wall unit elements of each new pipe section is held centered inside the corresponding outer wall unit element by means of a self-centering and anti-slip device (8).

3. A method according to claim 2, wherein, after the step of lowering each new pipe section into the sea, the self-centering and anti-slip device is activated.

4. A method according to any one of claims 1 to 3, wherein the preheating of the inner wall unit elements of each new pipe section is performed by induction heating of said inner wall unit elements.

5. A method according to any one of claims 1 to 4, wherein the pipe is installed at sea by means of a laying ship having a J-lay tower;
the step of preheating the inner wall unit elements of each new pipe section is performed with the inner wall unit elements in a substantially horizontal position;
the step of assembling the inner wall unit elements of each new pipe section to the inner wall of the pipe that is already installed at sea comprises raising said inner wall unit elements in the J-lay tower in order to tilt them into a substantially vertical position;
the step of assembling the outer wall unit elements of each new pipe section to the outer wall of the pipe that is already installed at sea comprises previously sliding the outer wall unit elements relative to the inner wall unit elements; and
the step of lowering each new pipe section into the sea comprises causing the laying ship to move forwards by an amount corresponding substantially to the length of the pipe section.

6. A method according to claim 1, wherein the step of preheating the inner wall unit elements of each new pipe section is performed by electrically heating the inner wall unit elements by means of electric heater cables extending over the entire length of the inner wall unit elements.

7. A method according to claim 6, wherein, prior to the step of assembling a free end of the outer wall unit elements of each new pipe section to the outer wall of the pipe that is already installed at sea, the method comprises a step of electrically connecting the electric heater cables of the inner wall unit elements to the electric heater cables of the inner wall unit element of the preceding pipe section.

8. A method according to claim 7, wherein electric heating of the inner wall unit element of the pipe sections that have been installed is maintained throughout the installation at sea of the pipe, and then the electric heating is deactivated once the complete pipe has been made on board the laying ship and then installed on the sea bottom.
